# EUROPÄISCHE PATENTANMELDUNG

(11) **EP 1 382 915 A1**
(43) Veröffentlichungstag der Anmeldung: **21.01.2004**
(21) Anmeldenummer: 02015764.0
(22) Anmeldetag: 15.07.2002
(51) Int. Cl.: F24D 3/16, E04C 2/52

(54) **Wärmetauscher-Element und Verfahren zum Herstellen sowie Verfahren zum Montieren solcher Elemente**

(71) Anmelder: SULZER, Hans Dietrich, CH-8704 Herrliberg (CH)
(72) Erfinder: SULZER, Hans Dietrich, CH-8704 Herrliberg (CH)
(74) Vertreter: Stocker, Kurt

(57) **Zusammenfassung**

Zum Bereitstellen einer Wärmetausch-Berandungsfläche eines Raumes werden Wärmetauscher-Elemente (8) mit mindestens einer Wärmetauscher-Leitung (2) beschrieben, die plattenförmig sind, dabei zwei voneinander abgewandte Hauptflächen (7) und eine die Hauptflächen verbindende Umfangsfläche (6), eine Fasermatte (1) und eine Putzschicht (3) umfassen, wobei die Putzschicht (3) an der Fasermatte (1) haftet und die mindestens eine Wärmetauscher-Leitung (2) zumindest teilweise in der Putzschicht (3) verläuft. Die Leitung (2) weist mindestens zwei Anschlüsse (2a) im Bereich der Umfangsfläche (6) auf. Beim Montieren werden mindestens zwei Wärmetauscher-Elemente (8) aneinander anschliessend an einer Raumberandungsfläche (9) befestigt, die zumindest zwei Anschlüsse (2a) jedes Wärmetauscher-Elementes (8) werden an einen Wärmetausch-Kreis angeschlossen, zumindest ein Abdeckelement (12) wird an ein Wärmetauscher-Element (8) anschliessend montiert und eine Putzmischung wird zumindest im Bereich von Fugen (13) aufgetragen, so dass eine im wesentlichen ebene Putzoberfläche entsteht. Die Fasermatte (1) wirkt als Isolation. Dadurch wird gewährleistet, dass der grösste Anteil des Wärmeflusses von und zur mindestens einen Wärmetauscher-Leitung (2) durch die Putzschicht (3) also direkt zwischen Innenraum und Leitung (2) auftritt.

## Beschreibung

Die Erfindung bezieht sich auf ein Element nach dem Oberbegriff des Anspruches 1, ein Herstellungsverfahren nach dem Oberbegriff des Anspruches 8 und auf ein Montageverfahren nach dem Oberbegriff des Anspruches 11.

An Wänden und insbesondere an Decken von Räumen, die lediglich eine kleine Kühloder Heizleistung benötigen, werden Leitungssysteme bzw. Kühl- oder auch Heizelemente damit angebracht. Im Betriebszustand wird ein Heiz- oder Kühlmedium, vorzugsweise eine Flüssigkeit, gegebenenfalls aber auch ein Gas durch das Leitungssystem gefördert. Da die Kühl- bzw. Heizleistung solcher Elemente häufig relativ klein ist, können die Leitungssysteme hinter einer Sichtfläche angeordnet werden. Bei herunter gehängten Decken werden beispielsweise Kühl- oder Heizregister mit Leitungen, die von einem Eintritts-Anschluss zu einem Auslass-Anschluss führen, auf die Deckenelemente gelegt, so dass sie auf der vom Raum abgewandten Seite der Deckenelemente liegen. Um einen direkten Kontakt von Raumluft mit den Leitungen zu ermöglichen, weisen die Deckenelemente Durchtrittsöffnungen auf. Eine für den gewünschten Wärmeaustausch förderliche Luftzirkulation wird sich bei Kühlleitungen aufbauen können, weil ja die gekühlte Luft absinkt. Bei Heizleitungen wird die erwärmte Luft in den Hohlraum über der herunter gehängten Decke aufsteigen, bzw. wird sich eine Zirkulation in diesem Hohlraum aufbauen, so dass die Heizwirkung auf den darunterliegenden Raum über den Hohlraum und somit nicht effizient erfolgt.

Nebst den Leitungssystemen auf den herunter gehängten Decken sind auch Gipsdecken bekannt, in welche Leitungssysteme eingelegt sind. Dazu werden beispielsweise mit Gips beschichtete Kartonplatten an der Decke oder an einer von der Decke herunter hängenden Struktur befestigt. An der Gipsoberfläche wird ein Leitungssystem festgeklebt und anschliessend wird soviel Gips aufgetragen, dass das Leitungssystem überdeckt ist. Leitungssysteme können auch an Wänden festgeklebt und anschliessend mit einem Putzmaterial überdeckt werden. Um das Leitungssystem zu überdecken, muss viel Gips aufgetragen werden, was mit einem entsprechend grossen Aufwand verbunden ist. Zudem ist bereits das Aufkleben des Leitungssystemes aufwendig.

Wenn die benötigte Heiz- oder Kühlleistung klein ist, so kann diese gegebenenfalls bereits von einem Leitungssystem gewährleistet werden, das lediglich eine kleine Teilfläche einer Wand oder einer Decke überspannt. Für Minenergie-Häuser in Holzbauweise werden beispielsweise in massiven Platten Kanäle ausgefräst und in diese Kanäle Leitungen eingelegt. Die Platten mit den Leitungen, bzw. einer schlangenförmig verlaufenden Leitung, werden anstelle einer massiven Wandplatte eingesetzt, so dass die glatte Oberfläche dem Wohn- bzw. Arbeitsraum zugewandt ist. Diese glatte Oberfläche wird mit Farbe gestrichen oder mit einer Tapete bzw. einem Putz versehen. Solche Platten mit einer in einen Kanal eingelegten Leitung können als fertige Elemente montiert werden, so dass zumindest das Aufkleben der Leitungen und das Auftragen einer die Leitungen überdeckenden Putzschicht wegfällt. Dort, wo ein solches Wärmetauscher-Element montiert wird, muss eine Anschlussmöglichkeit mit einer Zu- und einer Ableitung vorhanden sein. Die Leitungen des Elementes werden über Verbindungsstücke, beispielsweise Klemmhülsen, mit den Anschlussleitungen verbunden. Danach wird der Bereich mit dem Anschlussleitungen bzw. Verbindungen durch eine Abdeckung verschlossen. Diese Platten mit auf der Rückseite eingelegten Leitungen haben verschiedene Nachteile, so können sie beispielsweise nur kleine Wand- oder gegebenenfalls auch Deckenbereiche belegen. Zudem handelt es sich um Spezialanfertigungen, deren Grössen an die jeweiligen Verhältnisse angepasst werden müssen. Die Wärm- bzw. Kühlleistung muss durch die massive Platte erzielt werden, was mit einer Reduktion der Effizienz verbunden ist. Diese reduzierte Effizienz führt zu einem reduzierten Wärmefluss zwischen Innenraum und Wärmetauscher-Leitungen, der zudem noch konkurrenziert wird vom unerwünscht hohen Wärmefluss durch die Wand.

Aus der DE 196 36 944 ist eine Lösung in Sandwichbauweise bekannt, bei der Kühlrohrregister zwischen zwei Trockenbauplatten eingelegt sind. Diese Elemente werden zum Bereitstellen einer Kühldecke rasterartig nebeneinander eingebaut. Um die Kühlrohrregister in Kühlkreisläufe einzubinden, sind über den Sandwichelementen ein Zulauf-, ein Ablauf- und Verbindungsrohre vorgesehen. Im Kontaktbereich der aneinander anschliessenden Elemente treten an der Unterseite der Kühldecke Fugen auf, die gegebenenfalls überspachtelt oder überklebt werden. Diese Sandwichelemente sind mit einer aufwendigen Montage verbunden, weil sie schwer sind und für die erwähnten Rohre einen Freiraum über der Kühldecke brauchen. Die Herstellung der Elemente ist sehr aufwendig, weil zwei Trockenbauplatten mit einem gewünschten Abstand zueinander montiert und vorgängig die Kühlleitungen eingelegt werden müssen. Die Sandwichbauweise benötigt zwischen den Platten Distanzhalter, die als Schallbrücken wirken, so dass Schall von der Decke übertragen und wieder abgestrahlt werden kann. Zur Schalldämmung müssten weitere Elemente eingesetzt werden.

Aus der DE 42 43 426 ist eine in einer Form hergestellte Platte mit eingelegten Kunststoffröhrchen bekannt. Die Gussmasse zum Herstellen der Platte besteht aus Sand der mit einem flüssigen Bindemittel gemischt ist. Die Herstellung der Gussplatten ist sehr aufwendig, insbesondere weil die Röhrchen beim Einfüllen der Gussmasse lagerichtig gehalten werden müssen. Damit die Platten für den Transport und die Montage eine genügend grosse Stabilität aufweisen, müssen sie eine minimale Dicke aufweisen, die bei grösseren Platten zu einem unerwünscht hohen Gewicht führt. Entsprechend dem hohen Gewicht ist die Montage an der Decke aufwendig und es müssen stark belastbare Verbindungen zur Decke ausgebildet werden. An einer Decke oder einer Wand montierte einzelne Platten erscheinen als Fremdkörper. Zudem müssen zum Bereich der Platte Anschlussleitungen verlegt werden.

Der Erfindung liegt aufgrund der Mängel der Lösungen gemäss dem Stande der Technik die Aufgabe zugrunde, eine bezüglich Herstellung und Montage einfache Lösung zu finden, die zudem den gewünschten Wärmefluss gewährleistet, optisch ansprechend sowie schalldämmend ist. Vorzugsweise sollen verschieden grosse Flächen mit kleinem Aufwand mit Wärmetauscherflächen versehen werden können.

Diese Aufgabe wird durch die Merkmale des Anspruches 1 bzw. 8 und 11 gelöst. Die abhängigen Ansprüche beschreiben alternative bzw. bevorzugte Ausführungsformen.

Bei der Lösung der Aufgabe wurde erkannt, dass eine Fasermatte mit einer an einer Hauptfläche angebrachten Putzschicht genügend stabil ist, um den Transport und die Montage ohne Beschädigung zu überstehen. Unter Fasermatte soll ein schichtförmiges, luftdurchlässiges Produkt verstanden werden, bei dem Fasern in Kontaktbereichen von einem Binder miteinander verbunden sind. Solche Fasermatten weisen einen Hohlraumanteil auf und sind zumindest wenig elastisch verformbar. In der Matte sind zusammenhängende Luftkanalsysteme ausgebildet. Eine zweckmässige Fasermatte hat beispielsweise eine Mächtigkeit von mindestens 25, gegebenenfalls im Bereich von 30 insbesondere aber im Bereich von 60 mm und umfasst beispielsweise Glasfasern, Steinwolle oder Silikatfasern. Wenn nun auf die Fasermatte mindestens eine Wärmetauscher-Leitung aufgelegt und anschliessend die Putzschicht aufgetragen wird, so verläuft die mindestens eine Wärmetauscher-Leitung zumindest teilweise in der Putzschicht. Die Putzschicht haftet an der Fasermatte und hält die mindestens eine Leitung im Wärmetauscher-Element. Die freie Oberfläche der Putzschicht soll Unebenheiten der Fasermatten ausgleichen, so dass die montierten Elemente eine im wesentlichen ebene Oberfläche bilden. Wenn die ebene Oberfläche nicht beim Auftragen der Putzschicht, welche die Leitungen einschliesst, erzielt werden kann, so wird gegebenenfalls zwischen den Leitungen und der Fasermatte, oder über der Putzschicht mit den Leitungen, eine Ausgleichsschicht aufgetragen.

Zum Aushärten der Putzschicht werden organische oder anorganische Binder eingesetzt. So können etwa selbst vernetzende Binder, Additions-Polymerisate, Kunstharzbinder, beispielsweise unter Wasserentzug härtende Dispersionen, im UV-Licht härtende Binder, Zweikomponenten-Binder, oder auch Binder mit Silikaten bzw. Wasserglass oder eventuell Zement eingesetzt werden. Um die Herstellung der Wärmetauscher-Element mit einem kleinen Zeitaufwand zu ermöglichen, werden gegebenenfalls schneller bindende Binder bevorzugt.

Die Fasermatte wirkt aufgrund des Luftkanalsystems als Isolation. Dadurch wird gewährleistet, dass der grösste Anteil des Wärmeflusses von und zur mindestens einen Wärmetauscher-Leitung durch die Putzschicht also direkt gegen den Innenraum hin erfolgt. Dies gewährleistet einen effizienten Wärmeaustausch zwischen Wärmetauscher-Element und Innenraum. Der Wärmeaustausch zwischen dem Wärmetauscherfluid und dem Innenraum kann erhöht werden, wenn Leitungen mit hoher Wärmeleitfähigkeit beispielsweise aus Metall verwendet werden. Bei Metallrohren kann zudem eine geringere Wandstärke vorgesehen werden. Zudem kann ein Putz mit einer hohen Wärmeleitfähigkeit eingesetzt werden. Die Wärmeleitfähigkeit des Putzes wird erhöht, wenn der Hohlraumanteil im Putz verkleinert und/oder eine Putzmasse, bzw. ein Zusatz zur Putzmasse, mit hoher Wärmeleitfähigkeit eingesetzt wird. Ein Putz mit einem Kornanteil kann beispielsweise Aluminiumhydroxid, insbesondere Aluminiumorthohydroxid, umfassen. Gegebenenfalls werden zwei Lagen Putz mit unterschiedlichen Kornanteilen aufgetragen, insbesondere eine an die Fasermatte anschliessende erste Lage mit einem gröberen Korn, gegebenenfalls mit einer kleineren spezifischen Dichte, und eine auf die erste Lage aufgetragene zweite Lage mit einem feineren Korn, insbesondere mit grösserer Dichte. Der Kornanteil weist beispielsweise eine mittlere Korngrösse im Bereich von 0.1 bis 0.5mm, vorzugsweise aber von 0.25 bis 0.3mm auf, wobei die Korngrössen insbesondere im Bereich von 0.1 bis 0.5mm, vorzugsweise aber von 0.2 bis 0.4mm, variieren.

Die Putzschicht der Wärmetauscher-Elemente hat eine Mächtigkeit im Bereich des Aussendurchmessers der Wärmetauscher-Leitung. Bei Aussendurchmessern von beispielsweise 3 bis 4mm kann eine Putzschicht mit einer Mächtigkeit von 2 bis 8mm, vorzugsweise von 3 bis 6mm auf die Fasermatte aufgebracht werden. Es wäre möglich, dass Teilbereiche der Leitungsoberfläche sichtbar bleiben, so dass der Wärmeaustausch dieser Teilflächen nicht durch die Putzschicht beeinträchtigt wird. Wenn nach der Montage der Elemente eine Deckschicht aufgetragen wird, so überdeckt diese Deckschicht die Leitungen und gewährleistet dabei ein gleichmässiges Erscheinungsbild der gesamten Decke. Die Deckschicht hat gegebenenfalls lediglich eine Mächtigkeit im Bereich von 0.3 bis 2mm, vorzugsweise von 0.5 bis 1.5mm. Wenn die Wärmetauscher-Leitung lediglich von einer äusserst dünnen Schicht, die nur gerade das Erkennen der Leitungen verhindert, überdeckt ist, so wird der Wärmetransfer zwischen Leitung und Innenraum durch die Putzschicht nur unwesentlich beeinträchtigt. Weil die Fasermatte eine kleine Dichte und die Putzschicht eine kleine Mächtigkeit hat, ist das Gewicht eines Elementes klein, wobei die Hauptfläche eines bevorzugten rechteckigen Elementes eine Länge im Bereich von 60 bis 120cm vorzugsweise von im wesentlichen 80cm und eine Breite im Bereich von 40 bis 80cm vorzugsweise von im wesentlichen 60cm aufweist, was die Montage vereinfacht. Die zwischen den Elementen und der Decke benötigten Haftkräfte sind aufgrund des kleinen Gesamtgewichtes eines Elementes klein und können mit einer Klebeverbindung gewährleistet werden.

Fasermatten mit einer Putzschicht können flächendeckend nebeneinander an Wände oder Decken montiert werden. Dabei wird die unbeschichtete Hauptseite der Fasermatte mit der Decke bzw. Wand oder daran befestigten Anlageflächen verbunden, vorzugsweise verleimt. Wenn die Fugen zwischen den beschichteten Fasermatten ausgefüllt und die zusammenhängende Putzoberfläche mit einer Deckschicht versehen wird, so entsteht eine durchgängige Innenfläche. Gemäss der vorliegenden Erfindung wird zumindest ein Element mit mindestens einer Wärmetauscher-Leitung eingesetzt. Die Anzahl der benötigten Wärmetauscher-Elemente hängt von der gewünschten Heiz- bzw. Kühlleistung ab. Die Fläche, an der keine Wärmetauscher-Elemente benötigt werden, kann mit beschichteten Fasermatten ohne Leitungen belegt werden, wodurch die gesamte Decke bzw. Wand ein einheitliches Erscheinungsbild erhält. Durch das Auftragen einer sich über alle Elemente erstreckenden Deckschicht, kann das Erkennen der Wärmetauscher-Elemente verhindert werden.

Die Elastizität der Fasermatte wirkt schalldämmend. Eine Schallübertragung auf die Decke bzw. auf die Haltestruktur zum Halten der Elemente ist sehr gering, weil es in der Fasermatte keine Schallbrücken gibt. Die Putzschicht bildet eine Membran, deren Schwingungen von der Fasermatte stark gedämpft werden. Wenn die Putzschicht luftdurchlässig ist, so können auch die Luftkanäle in der Fasermatte zur Schalldämmung beitragen. Wenn eine stark elastische Fasermatte verwendet wird, so ist es zweckmässig, wenn auch die Leitungen und die Putzschicht etwas verformbar sind. Dazu werden beispielsweise Leitungen aus Kunststoff eingesetzt.

Eine verformbare Putzschicht kann mit Kunstharzbindern bzw. Dispersionsbindern erzielt werden. Insbesondere wenn die Körner der Putzmasse lediglich über dünne elastische Brücken miteinander verbunden sind, also beispielsweise wenn der Binderanteil tief ist, kann verhindert werden, dass die Putzschicht aufgrund von Verformungen der Fasermatten beschädigt wird. Gegebenenfalls wird die Verformbarkeit der Elemente durch Profile, bzw. Längs- oder Querprofile verringert. Diese Teile dienen vorzugsweise beim Beschichten der Elemente dem Halten der Leitung in einer gewünschten Anordnung. Indem die Putzschicht direkt an der Fasermatte haftet und dünn ausgebildet ist, wird ein stark unterschiedliches mechanisches Verhalten der beiden Schichten verhindert. Ohne durchgehende Zwischen- bzw. Trägerschicht gelangt die Putzschicht direkt auf die Fasermatte und das Entstehen einer Schallreflexionsfläche kann vermieden werden.

Damit die Wärmetauscher-Elemente direkt an der Decke bzw. Wand befestigt werden können, sind die beiden benötigten Anschlüsse jedes Elementes nicht von einer Hauptfläche vorstehend, sondern im Bereich der Umfangsfläche angeordnet. Wenn nun bei den Anschlüssen zwischen aneinander anschliessenden Elementen ein Freiraum vorgesehen wird, so können nach dem Montieren der Wärmetauscher-Elemente Verbindungen zwischen Anschlüssen ausgebildet werden. Zudem wird zumindest ein Anschluss aller Elemente mit einer Zu- und zumindest ein weiterer Anschluss mit einer Abführleitungen verbunden. Die Verbindungen werden so ausgeführt, dass dünnere Fasermatten mit einer Putzbeschichtung so in die Freiräume zwischen den Wärmetauscher-Elementen eingesetzt werden können, dass die Oberfläche der Putzschicht im wesentlichen absatzfrei bzw. glatt ist. Das heisst die Abdeckelemente haben eine Mächtigkeit, die um die benötigte Verbindungstiefe unter der Mächtigkeit der Wärmetauscher-Elemente liegt. Die Freiräume können sich kanalförmig in zumindest einer Richtung über die gesamte Decke erstrecken und dabei nebst den Verbindungen auch Zu- und Abführleitungen aufnehmen.

Beim Ausbilden einer Decke mit erfindungsgemässen Wärmetauscher-Elementen wird in einem ersten Schritt eine erste Reihe von Wärmetauscher-Elementen die jeweils mit ihren ersten oder gegebenenfalls zweiten Seitenflächen aneinander anliegen, mit der unbeschichteten Hauptfläche an der Decke bzw. Wand befestigt. Bei Lösungen mit Anschlüssen in der Form von Steckverbindungen können die Leitungen von aneinander anschliessenden Elemente durch das Ineinanderstecken der Steckverbindungen miteinander verbunden werden. Wenn die Steckanschlüsse in die Fasermatten eingesetzt sind, so können die Elemente nach dem Zusammenstecken ohne Freiräume direkt aneinander anschliessen. Bei Lösungen ohne Steckverbindungen werden Freiräume vorgesehen, die ein anschliessendes Verbinden der Anschlüsse ermöglichen. Um das Ausbilden von Freiräumen mit definierter Breite zu erleichtern, umfassen die Wärmetauscher-Elemente beispielsweise Distanzhalter, insbesondere in der Form von Anschlüssen, gegebenenfalls werden aber in einem zweiten Schritt an den freien Seiten der Wärmetauscher-Elemente Halteelemente montiert. Die Halteelemente können so ausgebildet werden, dass daran die Zu- und Abführleitungen festgesetzt werden können. In einem dritten Schritt wird eine zweite Reihe von Wärmetauscher-Elementen befestigt, die jeweils mit ihren ersten Seitenflächen aneinander anliegen. Die zweite Reihe kann direkt an die erste anschliessen, oder aber durch einen vorgegebenen Freiraum davon getrennt sein. In einem vierten Schritt werden zumindest zwei Anschlüsse jeder Reihe, gegebenenfalls aber beide Anschlüsse jedes Wärmetauscher-Elementes an einen Wärmetausch-Kreis angeschlossen. In einem fünften Schritt werden Abdeckelemente im Bereich der offen liegenden Anschlüsse angeordnet. Bei der Verwendung von Halteelementen oder Distanzhaltern werden die Abdeckelemente vorzugsweise an den Halteelementen oder Distanzhaltern befestigt. In einem sechsten Schritt wird gegebenenfalls zumindest im Bereich der Fugen eine Putzmischung aufgetragen. Um eine ebene Oberfläche zu erzielen, wird vorzugsweise ein siebter Schritt mit Schleifen durchgeführt. Auf die ebene Oberfläche der Putzschicht wird gegebenenfalls in einem achten Schritt eine Deckschicht, die sogenannte Dekorschicht aufgetragen. Zum Erzielen von äusserst ebenen Oberflächen wird die Deckschicht gegebenenfalls in mehreren Lagen aufgetragen. Es versteht sich von selbst, dass die Wärmetauscher-Elemente und die Halteelemente auch an einer Tragstruktur befestigt werden können.

Nebst der Verwendung von Gips werden vorzugsweise Putzmischungen mit einem Kornanteil eingesetzt. Um möglichst glatte bzw. gleichmässige Oberflächen zu erzielen, wird etwa ein Haupt-Kornanteil mit einer gleichmässigen Körnung, bzw. mit einem engen Korngrössenspektrum eingesetzt. Damit der Kornanteil an der Auftragsfläche haftet und zu einer festen Putzschicht aushärtet, umfasst die Putzmischung einen Binder. Als Binder werden organische oder anorganische Binder eingesetzt. So können etwa selbst vernetzende Binder, Additions-Polymerisate, Kunstharzbinder, insbesondere unter Wasserentzug härtende Dispersionen, im UV-Licht härtende Binder, Zweikomponenten-Binder, oder auch Binder mit Silikaten bzw. Wasserglas oder eventuell Zement eingesetzt werden.

Die mindestens eine Wärmetauscher-Leitung jedes Elementes weist beispielsweise einen Innendurchmesser von 0.8 bis 3mm, vorzugsweise von im wesentlichen 1 bis 2mm auf und ist beispielsweise zumindest teilweise aus Kunststoff, gegebenenfalls aber zumindest teilweise aus Metall, oder etwa aus nicht metallischen anorganischen Stoffen, wie Porzellan oder Glas gebildet. Nicht brennbare Leitungen sind bei hohen Brandschutz-Anforderungen vorteilhaft. Bei einer Kunststoffleitung mit einem Innendurchmesser von 1mm liegt der Aussendurchmesser im Bereich von 3mm. Bei Leitungen aus Metall wird gegebenenfalls ein grösserer Rohrdurchmesser, beispielsweise ein Aussendurchmesser von 5mm, bevorzugt.

Die Erfindung wird in den Figuren und mit einem Beispiel weiter beschrieben. Dabei zeigt
- Fig. 1: eine schematische Darstellung des Herstellungsverfahrens zum Bereitstellen eines Wärmetauscher-Elementes,
- Fig. 2a und 2b: eine schematische Draufsicht auf ein Wärmetauscher-Element mit einer schlangenförmigen Leitungsanordnung
- Fig. 3: eine schematische Draufsicht auf ein Wärmetauscher-Element mit einer parallelen Leitungsanordnung
- Fig. 4: einen Schnitt durch eine Deckenanordnung mit einem erfindungsgemässen Wärmetauscher-Element
- Fig. 5: einen Schnitt durch ein Wärmetauscher-Element mit mindestens zwei unterschiedlichen Putzlagen,
- Fig. 6: eine schematische Draufsicht auf eine Anordnung mit in Serie angeschlossenen Wärmetauscher-Elementen,
- Fig. 7: einen Schnitt durch einen Verbindungsbereich von in Serie angeschlossenen Wärmetauscher-Elementen vor Abschluss des Verbindungsbereiches,
- Fig. 8: einen Schnitt durch den abgeschlossenen Verbindungsbereich von in Serie angeschlossenen Wärmetauscher-Elementen
- Fig. 9: eine schematische Draufsicht auf eine Anordnung mit parallel angeschlossenen Wärmetauscher-Elementen,
- Fig. 10: einen Schnitt durch einen Verbindungsbereich von parallel angeschlossenen Wärmetauscher-Elementen vor Abschluss des Verbindungsbereiches,
- Fig. 11: einen Schnitt durch den abgedeckten Verbindungsbereich mit Halteelementen,
- Fig. 12: eine perspektivische Darstellung eines Deckenbereiches mit schematisch dargestellten, in Serie angeschlossenen Wärmetauscher-Elementen,
- Fig. 13: eine perspektivische Darstellung eines Deckenbereiches mit schematisch dargestellten, parallel angeschlossenen Wärmetauscher-Elementen,
- Fig. 14a 14b 14c: perspektivische Darstellung von Anschluss-Teilen,
- Fig. 15: eine stirnseitige Ansicht eines Wärmetauscher-Elementes mit Anschlüssen in der Form von Steckverbindungen,
- Fig. 16: eine seitliche Ansicht eines Wärmetauscher-Elementes mit Anschlüssen in der Form von Steckverbindungen,
- Fig. 17: eine seitliche Ansicht zweier Wärmetauscher-Elemente mit Anschlüssen in der Form von Steckverbindungen, beim Zusammenstecken,
- Fig. 18: eine Untersicht einer Decke mit Wärmetauscher-Elementen, die über Steckverbindungen miteinander verbunden sind; und
- Fig. 19: eine perspektivische Darstellung von Fasermatten mit Leitungshalterungen und Leitungen

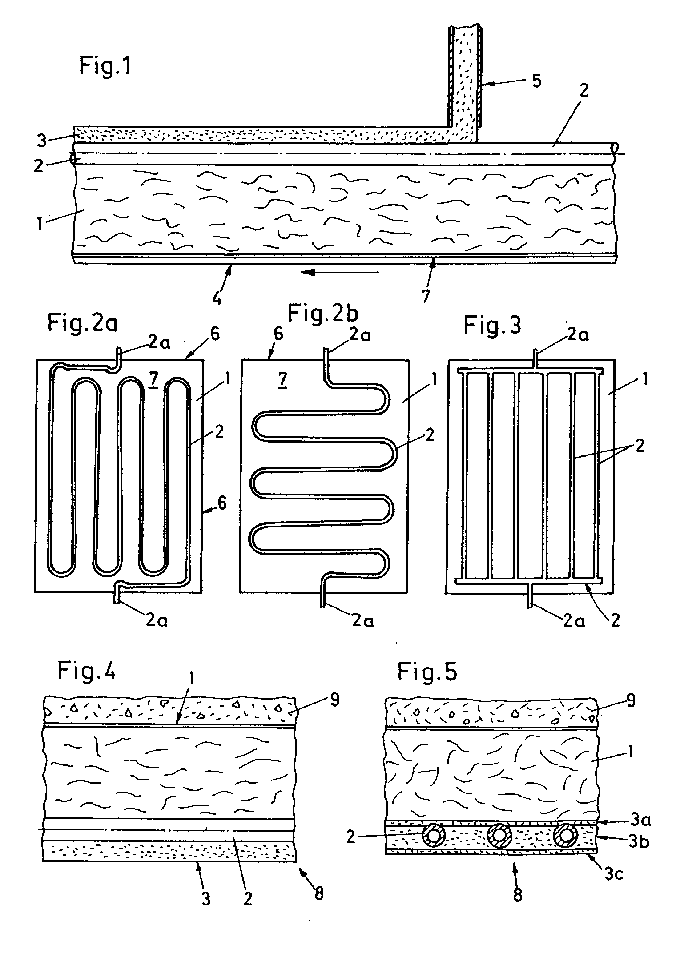

Fig. 1 zeigt schematisch das Herstellungsverfahren, bei dem eine Fasermatte 1 mit einer Hauptfläche 7 auf einer Förderfläche 4, vorzugsweise einem Band, liegt und an einer Beschichtungsanlage 5 vorbeibewegt wird. Bevor die Fasermatte 1 in den Bereich der Beschichtungsanlage 5 gelangt, wird zumindest eine Wärmetauscher-Leitung 2 auf die Fasermatte 1 aufgelegt. Bei der Beschichtungsanlage 5 wird eine Putzmasse schichtförmig, mit einer im wesentlichen glatten freien Oberfläche, auf die Fasermatte 1 und dabei zumindest auch teilweise auf die mindestens eine Wärmetauscher-Leitung 2 aufgetragen. Durch den anschliessenden Aushärtungsvorgang wird eine Haftung der Putzschicht 3 an der Fasermatte 1 und ein Festsitzen der Leitung 2 in der Putzmasse 3 erzielt. Gegebenenfalls wird mit zumindest einer weiteren Beschichtungsanlage eine weitere Lage der Putzschicht 3 aufgetragen.

Die Figuren 2a, 2b und 3 zeigen zwei typische Anordnungen der Leitung 2 auf der Fasermatte 1. Die Leitung 2 wird beispielsweise schlangenförmig, mit den Bögen im Bereich der kurzen oder langen Seitenlinie ausgelegt, wobei bei gleicher Leitungslänge gemäss Fig. 2b mehr Bögen notwendig sind als gemäss Fig.2a . Gemäss Fig. 3 werden zwischen zwei Verteilabschnitten mehrere Leitungen parallel angeordnet. Die Leitung 2 umfasst zwei Anschlüsse 2a im Bereich der Umfangsfläche 6.

Fig. 4 zeigt ein an einer Decke 9 festgeklebtes Wärmetauscher-Element 8 mit einer Fasermatte 1, einer Leitung 2 und einer ausgehärteten Putzschicht 3. Weil die Fasermatte 1 eine kleine Dichte und die Putzschicht 3 eine kleine Mächtigkeit hat, ist das Gewicht eines Elementes 8 klein, was die Montage vereinfacht.

Fig. 5 zeigt ein an der Decke 9 befestigtes Wärmetauscher-Element 8 mit 2 Putzlagen 3a und 3b, die bereits beim Herstellen des Elementes 8 aufgetragen wurden. Eine dünne Deckschicht 3c wurde erst nach der Befestigung der Elemente 8 an der Decke auf die freie Oberfläche der Putzschicht aufgetragen.

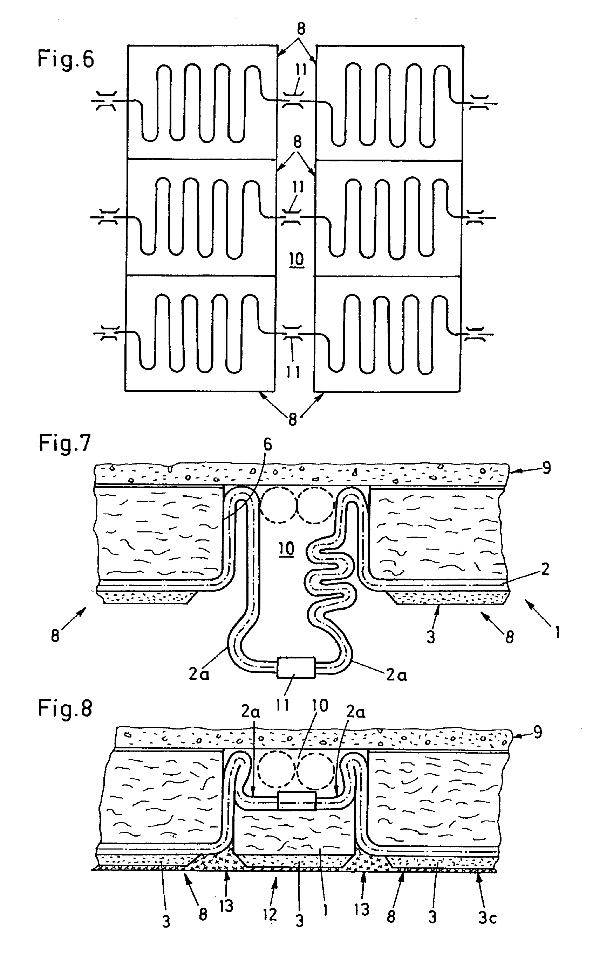

Fig. 6 zeigt zwei Reihen von Wärmetauscher-Elementen 8, zwischen denen ein Freiraum 10 für die nach der Montage zu erstellenden Verbindungen ausgespart ist. In der dargestellten Ausführungsform sind benachbarte Elemente 8 der beiden Reihen in Serie aneinander angeschlossen. Dazu sind die einander zugewandten Anschlüsse 2a der Leitungen 2 mittels Hülsen 11 miteinander verbunden.

Aus Fig. 7 ist ersichtlich, dass die Anschlüsse 2a als flexible Leitungen im Bereich der Umfangsfläche 6 aus dem Wärmetauscher-Element 8 austreten und zum Verbinden miteinander etwas nach unten aus dem Freiraum 10 herausgeführt werden können. Um ein Ausreissen der Leitungen 2 aus der Putzschicht 3 zu verhindern, sind diese gegebenenfalls im Austrittsbereich an der Fasermatte 1 festgesetzt.

Nach dem Verbinden, bzw. Aufsetzen und Verpressen der Hülse 11, werden die Anschlüsse 2a, wie in Fig. 8 dargestellt in den Freiraum 10 gegen die Decke 9 gedrückt. Mit einem eingepressten, vorzugsweise aber eingeklebten, Abdeckelement 12 wird der Freiraum 10 so abgeschlossen, dass nach dem Ausfüllen der Fugen 13 zwischen den Putzschichten 3 aller Elemente 8 und 12 eines Deckenbereiches und gegebenenfalls nach einem Schleifvorgang eine ebene Putzschicht-Oberfläche entsteht. Die zum Ausfüllen eingesetzte Putzmasse entspricht beispielsweise der für die Beschichtung der Elemente 8, 12 eingesetzten Putzmasse. Gegebenenfalls ist der Binder so gewählt, dass er schneller aushärtet. Um zu verhindern, dass Übergänge zwischen den Elementen 8, 12 erkennbar sind wird gegebenenfalls auf die ganze Decke eine Deckschicht 3c aufgetragen.

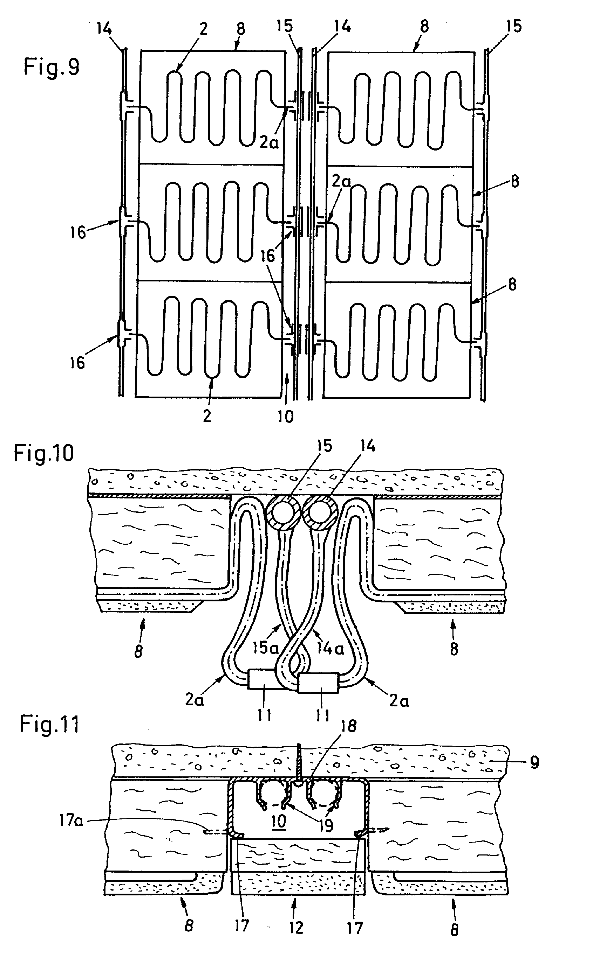

Fig. 9 zeigt zwei Reihen von Wärmetauscher-Elementen 8, zwischen denen ein Freiraum 10 für die nach der Montage zu erstellenden Verbindungen ausgespart ist. In der dargestellten Ausführungsform sind die Elemente 8 jeder Reihen parallel an eine Zuund eine Abführleitung 14 bzw. 15 angeschlossen. Dazu sind die Anschlüsse 2a der Wärmetauscher-Leitungen 2 mittels t-förmiger Anschluss-Stücke 16 an den Zu- und Abführleitungen 14 bzw. 15 und damit an einem Wärmetausch-Kreis angeschlossen. Es versteht sich von selbst, dass die Anschlüsse 2a eines Wärmetauscher-Elementes 8 auch beide auf der gleichen Seite ausgebildet werden können, so dass zwei Reihen mit Elementen 8 von nur einem Freiraum 10 aus angeschlossen werden können.

Fig. 10 zeigt Zu- und Abführleitungen 14, 15 mit Anschlussstücken 14a, 15a die aus dem Freiraum 10 nach unten hängen und über Hülsen 11 mit den Anschlüssen 2a verbindbar sind. Ein einfaches Verbinden ist möglich, wenn jeder Anschluss 2a ein flexibles Kunststoffrohr umfasst oder mit einem flexiblen Kunststoffrohr verbindbar ist, so dass jeder Anschluss 2a an einen Anschluss 2a eines benachbarten Wärmetauscher-Elementes 8 oder an einer Anschlussleitung 14, 15 anschliessbar ist.

Gemäss Fig. 11 werden zum Definieren der Breite des Freiraumes 10, gegebenenfalls zum Halten von Zu- und Abführleitungen 14 bzw. 15, und insbesondere zum Bereitstellen von Anschlags- und Befestigungsflächen 17, Halteelemente 18 an der Decke 9 montiert. Gegebenenfalls greifen die Halteelemente mit Krallen 17a in die Wärmetauscher-Elemente 8 ein. Der Abstand der Anschlags- und Befestigungsflächen 17 von der Decke 9 und die Mächtigkeit der in den Freiraum 10 einzusetzenden Abdeckelemente 12 entspricht der Dicke der Wärmetauscher-Elemente 8. Die Abdeckelemente 12 werden vorzugsweise an den Anschlags- und Befestigungsflächen 17 festgeklebt. Zum Halten der Zu- und Abführleitungen 14 bzw. 15 umfassen die Halteelemente 18 gegebenenfalls Klammern 19, so dass die Leitungen 14 und 15 schon vor dem Einsetzen der Abdeckelemente 12 im Freiraum 10 gehalten werden können.

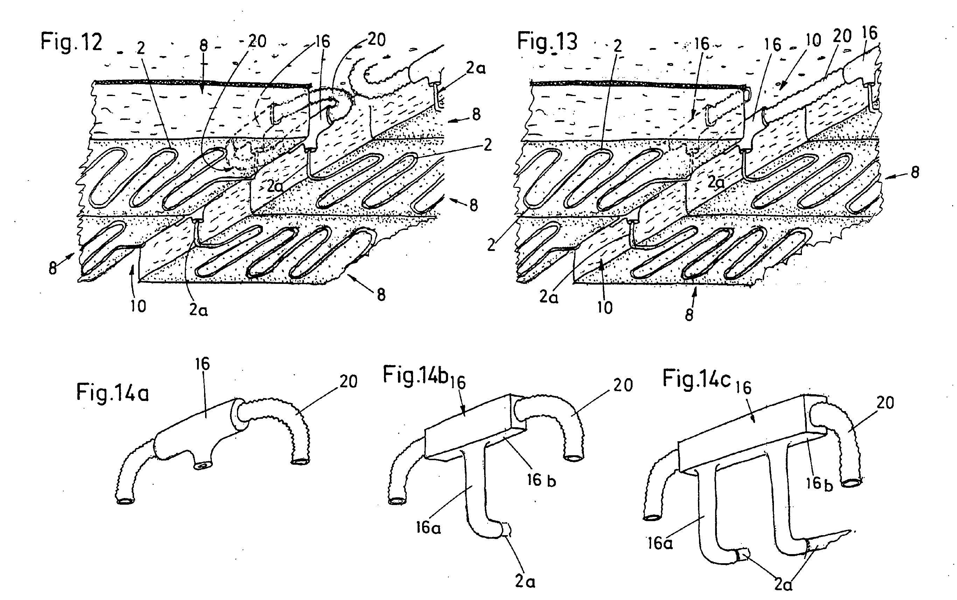

Fig. 12 und 13 zeigen einen Deckenbereich mit schematisch dargestellten, beidseits eines Freiraumes 10 angeordneten Wärmetauscher-Elementen 8, bei denen die Putzschicht 3 nicht eingezeichnet ist, damit die Leitungen 2 erkennbar sind. Jeder Anschluss 2a ist mit einem T-förmigen Anschluss-Stück 16 verbunden. Gemäss Fig. 12 sind die einander zugewandten Anschluss-Stücke 16 mit je zwei Verbindungsleitungen 20 miteinander verbunden, so dass die Wärmetauscher-Elemente 8 beidseits des Freiraumes 10 in Serie miteinander verbunden sind. Gemäss Fig. 13 führen die Verbindungsleitungen 20 in Längsrichtung des Freiraumes 10 von einem Anschluss-Stück 16 zum nächsten, so dass die Wärmetauscher-Elementen 8 auf einer Seite des Freiraumes 10 parallel angeschlossen sind. Die T-förmigen Anschluss-Stücke 16 können getrennt von den Wärmetauscher-Elementen 8, oder aber mit diesen verbunden sein.

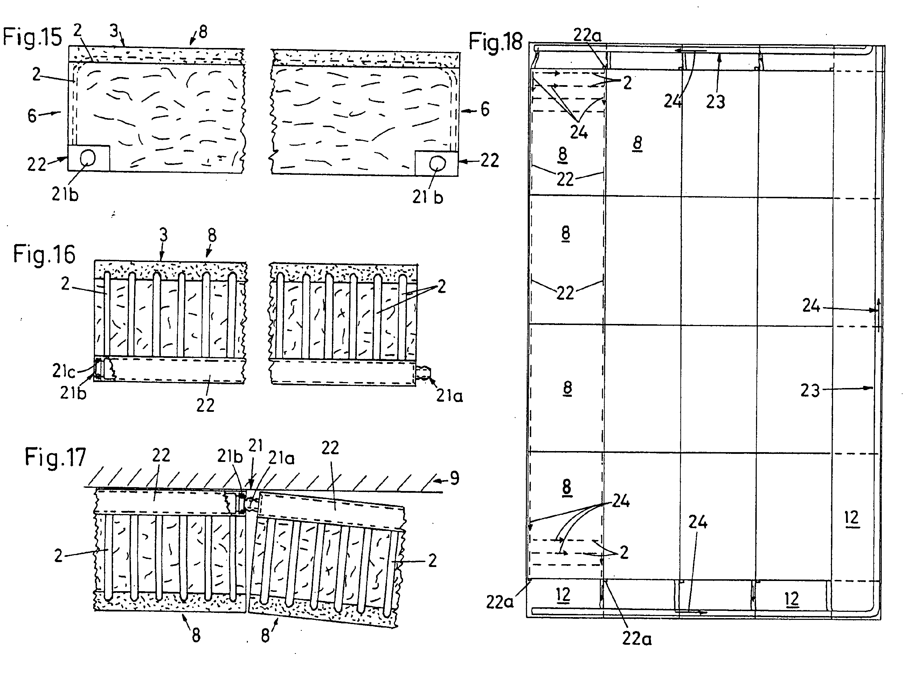

Fig. 14a zeigt ein Anschluss-Stück 16, das nach der Montage des Wärmetauscher-Elementes 8 an einen Anschluss 2a angeschlossen und mit einer Halteeinrichtung im Freiraum 10 gehalten wird. Fig. 14b und c zeigen Anschluss-Stücke 16, die bereits bei der Montage der Wärmetauscher-Elemente am Wärmetauscher-Element 8 festgesetzt und über mindestens ein festes Rohrteil 16a am Anschluss 2a angeschlossen sind. Das Anschluss-Stück 16 gemäss Fig. 14c gehört zu einem Wärmetauscher-Element 8 mit zwei Leitungen 2 und somit vier Anschlüssen 2a. Anstelle von separat zu montierenden Haltern 18 können die an den Wärmetauscher-Elementen 8 befestigten Anschluss-Stücke 16 sowohl das Halten der Verbindungsleitungen 20 als auch die Distanzhaltung gewährleisten. Es versteht sich von selbst, dass Distanzhalte-Stücke auch unabhängig vom Anschluss an den Wärmetauscher-Elementen 8 angeordnet sein können, so dass sie direkt mit den Elementen 8 an die Decke geklebt werden können. Wenn die stirnseitig zusammentreffenden Anschluss-Stücke 16 in gegenseitigem Kontakt sind, entsteht ein Freiraum 10 mit vorgegebener Breite. Die Abdeckelemente 12 können an die nach unten gerichteten horizontal verlaufenden Flächen 16b angelegt werden.

Die Figuren 15 bis 18 veranschaulichen eine Lösung mit Wärmetauscher-Elementen 8 mit Anschlüssen in der Form von Steckverbindungen 21 bei denen ein männliches 21a in ein weibliches 21b Teil gesteckt werden kann. Dabei umfasst jedes Wärmetauscher-Element 8 zwei parallel verlaufende Längskanäle 22 und zumindest eine Leitung 2, die vom einen zum anderen Längskanal 22 führt. Gegebenenfalls ist diese Leitung 2 schlangenförmig angeordnet. In der dargestellten Ausführungsform führen mehrere parallel verlaufende Leitungen 2 vom einen zum anderen Längskanal 22. Die Längskanäle 22 sind vorzugsweise im Bereich der Umfangsfläche 6 und insbesondere im Bereich der von der Putzschicht 3 abgewandten Hauptfläche des Wärmetauscher-Elementes 8 angeordnet. Beim Montieren wird gemäss Fig. 17 ein zu montierendes Element 8 mit einer nach oben gerichteten Klebeschicht leicht von der Decke 9 abgewinkelt gegen ein bereits montiertes Element 8 geführt, so dass die beiden männlichen Teile 21a in die entsprechenden weiblichen Teile 21b eingesteckt werden können. Es versteht sich von selbst, dass durch die Anordnung je eines männlichen und eines weiblichen Teiles auf der gleichen Stirnseite - wie bei Modelleisenbahn-Schienen - verhindert werden kann, dass zwei gleiche Teile aufeinander treffen. Anschliessend wird das zu montierende Element an die Decke gepresst bis die Klebeverbindung hält. Damit die Steckverbindung 21 dicht ist, wird etwa am weiblichen Teil 21b in einer ringförmigen Nut ein Dichtungsring 21c eingesetzt, der vom männlichen Teil 21a nach dem Zusammenstecken dichtend festgepresst wird. In der dargestellten Ausführungsform sind die Leitungen 2 und die Längskanäle 22 in Ausnehmungen der Fasermatte 1 angeordnet, so dass die Wärmetauscher-Elemente 8 entlang der gesamten Umfangsfläche 6 dicht aneinander anschliessend montiert werden können. Dadurch werden zwischen den Elementen keine Freiräume 10 benötigt.

Gemäss Fig. 18 werden alle reihenweise aneinander gesteckten Elemente 8 mit einer Zu- und einer Abführleitung 23 verbunden. Damit der mit den Pfeilen 24 dargestellte Fluss des Wärmetauscher-Mediums durch die Leitungen 2 der Elemente 8 erzielt wird, schliesst die Zuführleitung 23 am einen Raumende an je einen Längskanal 22 und die Zuführleitung 23 am anderen Raumende jeweils an den anderen Längskanal 22 an. Weil die Längskanäle 22 jeweils nur am einen Raumende angeschlossen sind, müssen sie am anderen Raumende mit Blinddeckeln 22a verschlossen werden. Nach dem Ausbilden dieser Anschlüsse und dem Anbringen der Blinddeckel 22a wird der Randbereich mit den Zuführleitung 23 durch Abdeckelemente 12 abgedeckt.

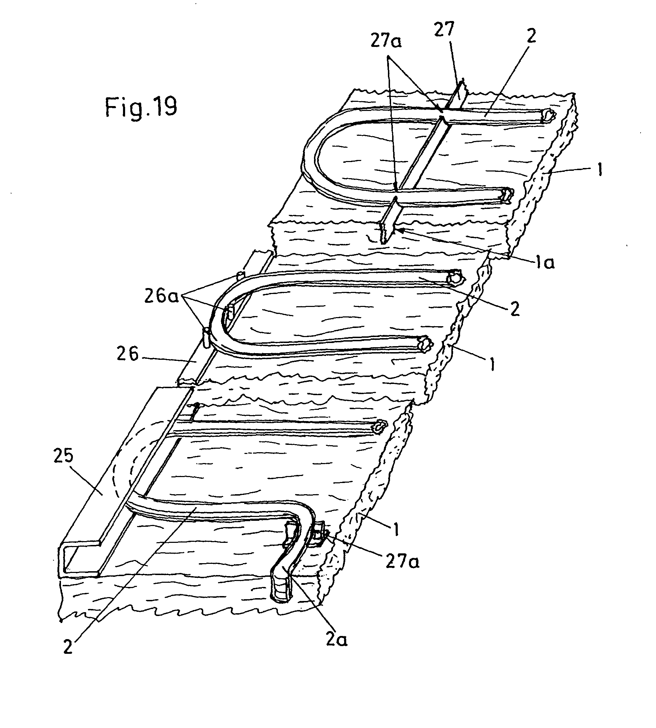

Fig. 19 zeigt Hilfselemente, die das Auflegen der Leitung 2 in einer gewünschten Form auf die Fasermatte 1 erleichtern und die Stabilität eines damit hergestellten Elementes 8 erhöhen. Ein Klemmelement 25 ist als u-Profil ausgebildet und klemmt die Bögen der Leitung 2 fest. Ein liegendes Flachelement 26 mit vorstehenden Noppen 26a führt die Leitung 2 im Bereich des Bogens mittels der Noppen 26a. Ein hochgestelltes Flachelement 27 hält die Leitung 2 beidseits des Bogens, wobei das hochgestellte Flachelement 27 Ausnehmungen 27a für das Durchführen der Leitung 2 aufweist und vorzugsweise in eine Nut 1a in der Fasermatte 1 eingesetzt ist. Um die Anschlüsse 2a in einer gewünschten Richtung vom Element 8 wegzuführen, ist gegebenenfalls ein kurzes Flachelement 27a vorgesehen.

Die Wahl des Durchmessers der Leitungen 2 wird von den folgenden Merkmalen beeinflusst: Gewicht, Druckabfall und Strömungsbild.

Um ein möglichst tiefes Gewicht zu erhalten, sollte der Rohraussendurchmesser möglichst klein sein. In diesem Fall wird auch der Rohrinnendurchmesser klein. Eine mögliche Wahl ist ein Rohraussendurchmesser von 4mm und eine Wandstärke von 1 mm.

Bei Kühldecken sollte die Temperatur des wärmeaufnehmenden Mediums nicht viel tiefer als diejenige des abzukühlenden Raumes liegen, um eine unerwünschte Kondensation der Luftfeuchtigkeit an der Decke bzw. am Wärmetauscher-Element zu vermeiden. Die Temperatur des wärmeaufnehmenden Mediums liegt im Allgemeinen zwischen 15 und 5°C, vorzugsweise um 10°C tiefer als die gewünschte Raumtemperatur. Beim Austritt des Wärmeaustauschers 8 wird immer noch eine Temperaturdifferenz bestehen.

Um einen effizienten Wärmeübergang zu gewährleisten, wird eine turbulente Strömung des wärmeaufnehmenden Mediums gewünscht. Daher sollte die Reynolds-Zahl grösser als 2300 sein. Dies wird erzielt, wenn die Gesamtlänge der Leitungen 2 zwischen den Anschlussleitungen 23 in der Grössenordnung von 10⁴ mal dem inneren Rohrdurchmesser liegt. Falls bei parallel angeschlossenen Wärmetauscher-Elementen 8 diese Leitungslänge nicht erreicht wird, so ist eine Serieschaltung zu bevorzugen. Zudem kann in jedem Element 8 auf parallel laufende Leitungen (2) verzichtet werden, indem die Leitung 2 schlangenförmig ausgelegt wird.

Der Rohrdurchmesser kann nicht zu klein gewählt werden, da der Druckabfall näherungsweise umgekehrt proportional zur fünften Potenz des Rohrinnendurchmessers ist.

## Patentansprüche

1. Wärmetauscher-Element (8) mit mindestens einer Wärmetauscher-Leitung (2) für ein Wärmetauscher-Medium, wobei das Element (8) plattenförmig ist und dabei zwei voneinander abgewandte Hauptflächen (7) und eine die Hauptflächen verbindende Umfangsfläche (6) umfasst, **dadurch gekennzeichnet, dass** das Element (8) eine Fasermatte (1) und eine Putzschicht (3) umfasst, wobei die Putzschicht (3) an der Fasermatte (1) haftet und die mindestens eine Wärmetauscher-Leitung (2) zumindest teilweise in der Putzschicht (3) verläuft sowie zumindest zwei Anschlüsse (2a) im Bereich der Umfangsfläche (6) aufweist.

2. Wärmetauscher-Element (8) nach Anspruch 1, **dadurch gekennzeichnet, dass** jeder Anschluss (2a) ein flexibles Kunststoffrohr umfasst oder mit einem flexiblen Kunststoffrohr verbindbar ist, so dass jeder Anschluss (2a) an einen Anschluss (2a) eines benachbarten Wärmetauscher-Elementes (8) oder an einer Anschlussleitung (14, 15) anschliessbar ist.

3. Wärmetauscher-Element (8) nach Anspruch 1 oder 2, **dadurch gekennzeichnet, dass** die Fasermatte (1) eine Mächtigkeit von mindestens 25, gegebenenfalls im Bereich von 30, insbesondere aber im Bereich von 60 mm aufweist und vorzugsweise Glasfasern, Steinwolle oder Silikatfasern umfasst.

4. Wärmetauscher-Element (8) nach einem der Ansprüche 1 bis 3, **dadurch gekennzeichnet, dass** die Putzschicht (3) zumindest einen Kornanteil und einen Binder umfasst, vorzugsweise aber zwei Lagen mit unterschiedlichen Kornanteilen umfasst, insbesondere eine an die Fasermatte (1) anschliessende erste Lage (3a) mit einem gröberen Korn, gegebenenfalls mit einer kleineren spezifischen Dichte, und eine auf die erste Lage (3a) aufgetragene zweite Lage (3b) mit einem feineren Korn, insbesondere mit grösserer Dichte.

5. Wärmetauscher-Element (8) nach einem der Ansprüche 1 bis 4, **dadurch gekennzeichnet, dass** die Putzschicht eine Mächtigkeit von 2 bis 8mm, vorzugsweise von 3 bis 6mm, aufweist und/oder dass die Putzschicht Aluminiumhydroxid, insbesondere Aluminiumorthohydroxid, umfasst.

6. Wärmetauscher-Element (8) nach einem der Ansprüche 1 bis 5, **dadurch gekennzeichnet, dass** der Kornanteil Körner mit einer mittleren Korngrösse im Bereich von 0.1 bis 0.5mm, vorzugsweise aber von 0.25 bis 0.3mm umfasst, wobei die Korngrössen insbesondere im Bereich von 0.1 bis 0.5mm, vorzugsweise aber von 0.2 bis 0.4mm, variieren.

7. Wärmetauscher-Element (8) nach einem der Ansprüche 1 bis 6, **dadurch gekennzeichnet, dass** die mindestens eine Wärmetauscher-Leitung (2) einen Innendurchmesser von 0.8 bis 2mm vorzugsweise im wesentlichen 1 mm aufweist und insbesondere die Leitung aus Kunststoff gegebenenfalls zumindest teilweise aus Metall gebildet ist.

8. Verfahren zum Herstellen von Wärmetauscher-Elementen (8) nach einem der Ansprüche 1 bis 7 **dadurch gekennzeichnet, dass** mindestens eine Wärmetauscher-Leitung (2) auf eine Fasermatte (1) aufgelegt wird und zumindest eine Lage der Putzschicht (3) auf die Fasermatte (1) aufgetragen wird, so dass die mindestens eine Leitung (2) zumindest teilweise in der Putzschicht (3) verläuft und die Putzschicht (3) mit der zumindest einen Wärmetauscher-Leitung (2) an der Fasermatte (1) haftet.

9. Verfahren nach Anspruch 8, **dadurch gekennzeichnet, dass** mindestens eine zweite Lage (3b) der Putzschicht (3) mit einem gegenüber der ersten Lage (3a) unterschiedlichen Kornanteil aufgetragen wird, wobei vorzugsweise die erste Lage (3a) im Vergleich zur zweiten Lage (3b) ein gröberes Korn und insbesondere eine kleinere spezifischen Dichte aufweist.

10. Verfahren nach Anspruch 8 oder 9, **dadurch gekennzeichnet, dass** der Kornanteil der zumindest einen Lage mit dem Aushärten eines Binders zu einer im wesentlichen festen Putzschicht (3) aushärtet.

11. Verfahren zum Montieren von Wärmetauscher-Elementen (8) nach einem der Ansprüche 1 bis 7, **dadurch gekennzeichnet, dass** mindestens zwei Wärmetauscher-Elemente (8) aneinander anschliessend an einer Raumberandungsfläche (9) befestigt werden, die zumindest zwei Anschlüsse (2a) jedes Wärmetauscher-Elementes (8) an einen Wärmetausch-Kreis angeschlossen werden, zumindest ein Abdeckelement (12) an ein Wärmetauscher-Element (8) anschliessend montiert wird und eine Putzmischung zumindest im Bereich von Fugen (13) aufgetragen wird, so dass eine im wesentlichen ebene Putzoberfläche entsteht.

12. Verfahren nach Anspruch 11, **dadurch gekennzeichnet, dass** zum Befestigen der Wärmetauscher-Elemente (8) die unbeschichtete Hauptfläche (7) der Fasermatten (1) an der Raumberandungsfläche (9) festgeklebt wird, wobei in einem ersten Schritt eine erste Reihe von Wärmetauscher-Elementen (8) die jeweils mit ihren ersten Seitenflächen aneinander anliegen, befestigt wird, in einem zweiten Schritt an die zweiten Seitenflächen anschliessend Halteelemente (18) montiert werden, in einem dritten Schritt an die Halteelemente (18) anschliessend eine zweite Reihe von Wärmetauscher-Elementen (8) die jeweils mit ihren ersten Seitenflächen aneinander anliegen, befestigt wird, in einem vierten Schritt die beiden Anschlüsse (2a) jedes Wärmetauscher-Elementes (8) an einen Wärmetausch-Kreis angeschlossen werden, in einem fünften Schritt die Abdeckelemente (12) an den Halteelementen (18) angeordnet werden, in einem sechsten Schritt die Putzmischung zumindest im Bereich der Fugen (13) aufgetragen wird und vorzugsweise in einem siebten Schritt mittels Schleifen eine ebene Oberfläche erzielt wird auf die gegebenenfalls in einem achten Schritt eine Deckschicht (3c) aufgetragen wird.

13. Verfahren nach Anspruch 11, **dadurch gekennzeichnet, dass** zum Befestigen der Wärmetauscher-Elemente (8) die unbeschichtete Hauptfläche (7) der Fasermatten (1) an der Raumberandungsfläche (9) festgeklebt wird, wobei in einem ersten Schritt eine erste Reihe von Wärmetauscher-Elementen (8) die jeweils mit ihren ersten Seitenflächen aneinander anliegen und von deren zweiten Seitenflächen Distanzelemente vorstehen, befestigt wird, in einem zweiten Schritt an die zweiten Seitenflächen anschliessend durch die Distanzelemente beabstandet eine zweite Reihe von Wärmetauscher-Elementen (8) die jeweils mit ihren ersten Seitenflächen aneinander anliegen, befestigt wird, in einem dritten Schritt die beiden Anschlüsse (2a) jedes Wärmetauscher-Elementes (8) an einen Wärmetausch-Kreis angeschlossen werden, in einem vierten Schritt die Abdeckelemente (12) an den Distanzelementen (18) angeordnet werden, in einem fünften Schritt die Putzmischung zumindest im Bereich der Fugen (13) aufgetragen wird und vorzugsweise in einem sechsten Schritt mittels Schleifen eine ebene Oberfläche erzielt wird, auf die gegebenenfalls in einem siebten Schritt eine Deckschicht (3c) aufgetragen wird.

14. Verfahren nach Anspruch 11, **dadurch gekennzeichnet, dass** zum Befestigen von Wärmetauscher-Elementen (8) mit zwei parallel verlaufenden Längskanälen (22) und zumindest einer die Längskanäle (22) miteinander verbindenden Leitung (2) die unbeschichtete Hauptfläche (7) zumindest einer Fasermatten (1) an der Raumberandungsfläche (9) festgeklebt wird, zumindest ein weiteres Element (8) mit einer gegen die Raumberandungsfläche (9) gerichteten Klebeschicht leicht von der Raumberandungsfläche (9) abgewinkelt gegen ein bereits montiertes Element (8) geführt wird, zwei männliche Teile (21a) in die entsprechenden weibliche Teile (21b) eingesteckt werden und anschliessend das angeschlossene Element (8) mit der Klebeschicht an der Raumberandungsfläche festgesetzt wird.
